# EUROPEAN PATENT SPECIFICATION

(11) **EP 1 176 171 B1**
(45) Date of publication and mention of the grant of the patent: **17.08.2005**
(21) Application number: 01114866.5
(22) Date of filing: 29.06.2001
(51) Int. Cl.: C08L 63/00, C08K 3/36, H01B 3/40

(54) **Electric insulating material and method of manufacture thereof**
Elektrisch isolierendes Material und dessen Herstellungsverfahren
Matériel électriquement isolant et son procédé de préparation

(30) Priority: 29.06.2000 JP 2000195584
(43) Date of publication of application: 30.01.2002
(73) Proprietor: KABUSHIKI KAISHA TOSHIBA, Kawasaki-shi, Kanagawa-ken 210-8572 (JP)
(72) Inventor: Makishima, Satoshi, Intel. Property Divn., Minato-ku, Tokyo (JP); Shimizu, Toshio, Intel. Property Divn., Minato-ku, Tokyo (JP); Ito, Yoshihiro, Intel. Property Divn., Minato-ku, Tokyo (JP); Miyagawa, Masaru, Intel. Proprty Divn., Minato-ku, Tokyo (JP); Yoshioka, Kanji, Intel. Property Divn., Minato-ku, Tokyo (JP)
(74) Representative: Henkel, Feiler & Hänzel

(56) References cited:
- EP-A- 0 391 183
- EP-B- 0 533 465
- WO-A-00/55254
- US-A- 4 701 479
- US-A- 5 747 557

## Description

### BACKGROUND OF THE INVENTION

### 1. Field of the Invention

The present invention relates to an electric insulating material (dielectric material) and a method of manufacture thereof.

### 2. Description of the Related Art

Epoxy resins have been employed for a long time as dielectric materials for electrical equipment in the electrical field and the field of semiconductors etc, on account of their excellent dielectric properties and thermal/mechanical properties. Examples are the fibre-reinforced composite materials or electrical component sealing materials employing high-voltage epoxy resin mouldings or epoxy resin, such as the bushings, insulating spacers or resin moulded coils or moulded valves etc. used in power equipment or reception/distribution equipment such as gas circuit breakers.

However, although such dielectric materials employing epoxy resin have high mechanical strength, they have the property that their toughness decreases and they become brittle as the glass transition temperature becomes higher. Accordingly, from the 1970s and 1980s, studies were carried out, in co-operation with universities and industrial companies, of materials of improved toughness, achieved by adding rubber particles to the epoxy resin, combining high mechanical strength of the epoxy resin with the ability to prevent lowering in toughness of the rubber particles and the ability to prevent brittleness.

Also, when rubber particles are dispersed in epoxy resin, dispersion thereof poses problems industrially, so rubber particles have been marketed having a so-called core/shell structure i.e. a structure like that of a "two-piece ball" such as is used in golf, in which the outside of the rubber particles is subjected to special chemical modification. By means of rubber particles having such a core/shell construction, aggregation of the rubber particles, which poses problems in achieving satisfactory dispersion thereof in the epoxy resin, can be reduced. Use of such rubber particles as an improver for insulating resin in the semiconductor field and/or heavy electrical field has therefore become common.

Such a dielectric material is disclosed for example in Laid-open Japanese Patent Application Number H. 2-288107 and Published Japanese Patent Number Sho. 62-501299.

In the case of dielectric materials using epoxy resin such as for example epoxy resin moulded materials, the chief epoxy resin blending agents and the curing agent blending agents are respectively separately prepared, typically with addition of inorganic fillers typified by silica or alumina with the objective of lowering the linear expansion coefficient of the mechanical strength, and addition of traces of surfactants, defoaming agents, and curing accelerators, respectively to the epoxy resin and curing agent; these are then employed by mixing the two blended products in the molding step of manufacturing the dielectric component. Heating, and, if necessary, defoaming treatment in vacuum etc., are then performed in order to obtain a viscosity suitable for the product and/or production step.

However, with such a dielectric material comprising epoxy resin, rubber particles and inorganic filler, although the toughness of the material is improved and a reduction of internal stress of the resin molding is obtained, the strength of the cured material itself is lowered by the addition of resilient bodies constituted by rubber particles having a core/shell structure. In particular, in the case of material used at high temperature and under high stress, such as in high-voltage equipment, it is undeniable that there is a lowering of initial strength, which has an adverse effect on creep rupture properties.

For example, in the case of the dielectric disclosed in Laid-open Japanese Patent Application Number H. 2-288107, it is difficult to decide whether or not the creep rupture properties are improved, since no comparison is made between dielectric materials of different types while keeping the glass transition temperature the same. In fact, evaluating this from the standpoint described above, from the fact that, looking at dielectric materials whose glass transition temperatures are close to each other, the initial strength of dielectric material to which rubber particles having the core/shell structure of this publication have been added is lower than that of a dielectric material to which such rubber particles have not been added, it may be concluded that creep rupture properties are adversely affected by these rubber particles. Also, Published Japanese Patent Number Sho. 62-501299 makes no disclosure at all concerning this point.

US-A-5 747 557 discloses a method of manufacturing a castable epoxy resin composition which comprises as components an epoxy resin, an acid anhydride in an amount sufficient for hardening, an inorganic filler, and acrylic rubber particles having a thermoplastic resin skin, said thermoplastic resin skin being 1 to 50 wt% of said acrylic rubber particles, wherein each of said acrylic rubber particles has epoxy groups on a surface thereof, and said acrylic rubber particles are present in an amount ranging between 2 and 40 parts by weight based on 100 parts by weight of said epoxy resin, wherein said inorganic filler is an alumina powder having a mean particle size by volume of 6 to 16 µm, and a particle size of at least 10 volume % of said alumina powder particles is 20 µm or greater, and wherein at least 90 volume % of said rubber particles are dispersed as discrete particles with a particle size by volume of 1 µm or less, said method comprising the steps of:
preparing a modified hardener by mixing said acrylic rubber particles with at least a portion of said acid anhydride by using shearing force applying means in sufficient force to uniformly disperse said rubber particles in said acid anhydride; and
mixing said modified hardener and the remainder of said components.

EP-A-0 391 183 discloses an electrical insulator comprising a thermosetting matrix based on an epoxy resin, said matrix comprising mineral filler powder particles and elastomeric filler particles incorporated therein.

US-A-4 701 479 discloses an organic filler in an epoxy-resin-based composition, said inorganic filler being a combination of two kinds of quartz powder of which one is a quartz powder having a spherical particle form and the other is a pulverized quartz powder in a specified proportion.

EP-A-0 533 465 discloses a liquid epoxy resin composition comprising an epoxy resin, at least one filler having a particle size from 10 to 10,000 micrometer, a thixotropic agent which is a highly dispersed silica, bentonite or a silicate in an amount less than that necessary to impart thixotropic properties and a polymer which dissolves in and thickens a mixture of the resin composition and a curing agent therefor, when the mixture is heated prior to curing.

### SUMMARY OF THE INVENTION

Accordingly, one object of the present invention is to provide a novel electric insulating material and method of manufacture thereof whereby the lowering of mechanical strength that occurs when epoxy molding resin is improved by addition of rubber particles is curbed.

In order to achieve the above object, the present invention comprises:
a heat cure matrix resin including epoxy resin and modified acid anhydride, all or part of said modified acid anhydride is methylnadic acid anhydride or nadic acid anhydride that has been subjected to hydrogenation treatment;
spherical fused silica inorganic particles including two or more types of particle size distribution, wherein a content of said inorganic particles is 50 wt% to 80 wt% of the total, a mean particle size of said particles of larger particle size being 2 µm to 20 µm and a mean particle size of said particles of smaller particle size being 0.5 µm to 5 µm, content constituting 2 wt% to 30 wt% of said inorganic particles; and
rubber particles including a core/shell structure.

With such a composition, the thermal and mechanical properties including the creep rupture properties, and the fracture toughness are improved and the balance of properties of the electric insulating material is improved.

If the glass transition temperature of the cured heat cure matrix resin and the cured electric insulating material itself is made at least 105°C in differential scanning calorimeter analysis, heat resistance is improved.

Also, if the particles of larger particle size of the inorganic particles are crystalline or fused pulverized silica, a lowering of costs can be achieved and mechanical strength is improved.

Also, due to the fact that the content of the inorganic particles is 50 wt% to 80 wt% of the entire electric insulating material, the mean particle size of the particles of larger particle size being 2 µm to 20 µm and the mean particle size of the particles of smaller particle size being 0.5 µm to 5 µm, their content constituting 2 wt% to 30 wt% of these inorganic particles, the balance of the blend constituting the filler becomes optimum, mechanical strength is improved and the material viscosity is lowered.

Also, in regard to the rubber particles, if their content with respect to 100 parts of epoxy resin within the heat cure matrix resin is made 3 phr (weight parts) to 20 phr (weight parts) and their mean particle size is made 0.1 µm to 1.0 µm, the balance of the blending of rubber particles having a core/shell structure is optimum, and the toughness value is improved without greatly impairing mechanical strength. Also, due to the fact that in the heat cure matrix resin, all or part of the modified acid anhydride is methylnadic acid anhydride or nadic acid anhydride that has been subjected to hydrogenation treatment, mechanical strength and toughness are further improved.

Also, if, in the inorganic particles, the total amount of the particles of smaller particle size is blended with the curing agent constituted by the modified acid anhydride in the heat cure matrix, pre-reaction of the epoxy resin due to impurities whilst the material is in storage can be prevented.

Furthermore, the present invention provides a method of manufacturing an electric insulating material including
a heat cure matrix resin comprising epoxy resin and a modified acid anhydride, all or part of said modified acid anhydride is methylnadic acid anhydride or nadic acid anhydride that has been subjected to hydrogenation treatment;
spherical fused silica inorganic particles having a particle size distribution of two or more kinds, wherein a content of said inorganic particles is 50 wt% to 80 wt% of the total, a mean particle size of said particles of larger particle size being 2 µm to 20 µm and a mean particle size of said particles of smaller particle size being 0.5 µm to 5 µm, content constituting 2 wt% to 30 wt% of said inorganic particles, and
rubber particles including a core/shell structure;
said method comprising:
blending said inorganic particles with said main epoxy resin agent or modified acidic anhydride curing agent in said heat cure matrix resin; and
admixing said rubber particles whilst raising the temperature.

With such a method, shearing force in the filler acts on aggregations of rubber having a core/shell structure, improving the efficiency of mixing.

Furthermore, the present invention provides a method of manufacturing an electric insulating material including
a heat cure matrix resin comprising epoxy resin and a modified acid anhydride, all or part of said modified acid anhydride is methylnadic acid anhydride or nadic acid anhydride that has been subjected to hydrogenation treatment;
spherical fused silica inorganic particles having a particle size distribution of two or more kinds, wherein a content of said inorganic particles is 50 wt% to 80 wt% of the total, a mean particle size of said particles of larger particle size being 2 µm to 20 µm and a mean particle size of said particles of smaller particle size being 0.5 µm to 5 µm, content constituting 2 wt% to 30 wt% of said inorganic particles, and
rubber particles including a core/shell structure;
said method comprising:
discharging a main epoxy resin agent and modified acid anhydride curing agent out of said heat cure matrix resin in which said inorganic particles and said rubber particles are blended; and
then, after mixing or before pouring said main epoxy resin agent and modified acid anhydride curing agent in said heat cure matrix resin, passing said blended material through a filter of mesh finer than 50 mesh.

With such a method, it is possible to remove aggregations produced by poor dispersion, impurities and foreign matter.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Figure 1 is a cross-sectional view of a dielectric material for illustrating an embodiment of the present invention;
Figure 2 is a view given in explanation of an Olyphant washer test method in a test of cracking resistance; and
Figure 3 is a view given for purposes of comparing the creep rupture properties of the dielectric material of Figure 1 and a prior art dielectric material.

### DETAILED DESCRIPTION OF THE PREFERRED EMBODIMENTS

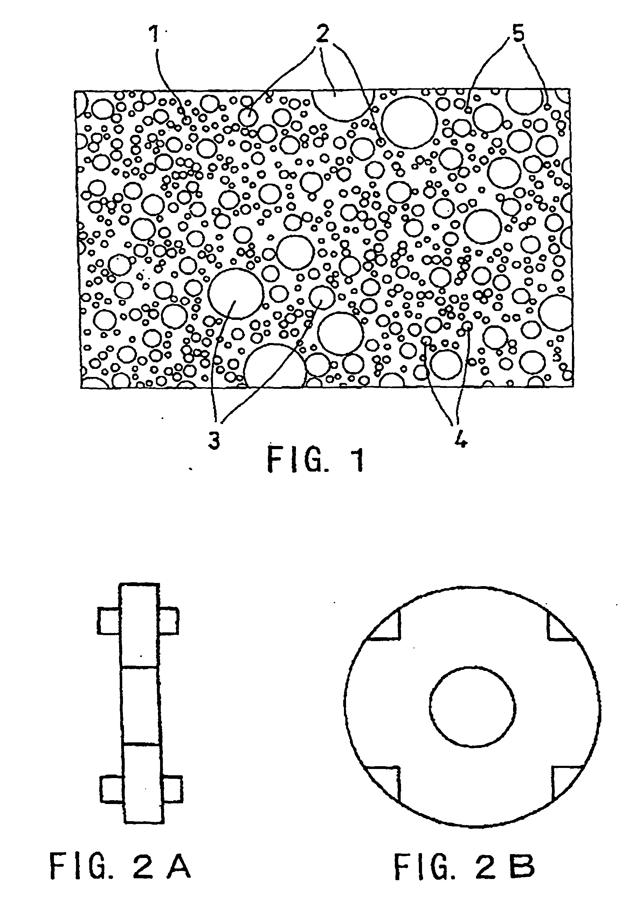

Referring now to the drawings, wherein like reference numerals designate identical or corresponding parts throughout the several views, and more particularly to Figure 1 thereof, one embodiment of the present invention will be described.

Figure 1 is a cross-sectional view of a cured product made of electric insulating material illustrating an embodiment of the present invention. In this Figure, number 1 is a heat cure matrix resin, constituted of an epoxy resin and modified acid anhydride. Number 2 is an inorganic filler consisting of silicon particles of different particle size, namely, silica 3 of large particle size and silica 4 of small particle size; in addition, rubber particles 5 having a core/shell structure are added as organic filler to the heat cure matrix resin 1.

An electric insulating composition according to this embodiment was prepared as follows.

### (Embodiment)

The composition consisted of:
(1) Bisphenol-based epoxy resin (100 phr (per hundred of resin by weight))
   Breakdown:
   Bisphenol A epoxy resin (epoxy equivalent 360, 50 phr)
   Bisphenol F epoxy resin (epoxy equivalent 360, 50 phr)
(2) Methylnadic anhydride (85 phr)
(3) Spherical fused silica (74 wt% of heat cure matrix)
   Breakdown:
   Mean particle size 10 -m (70 wt%)
   Mean particle size 2 -m (4.0 wt%: 5.4 wt% with respect of the total silica)
(4) Core/shell rubber particles (10 phr).

Curing was conducted with addition of a generally employed amine-based curing accelerator to the molding material in order to accelerate curing. The reason for using respectively 50 phr of bisphenol A epoxy resin and bisphenol F epoxy resin corresponding to epoxy equivalent 360 for the epoxy resin was in order to achieve a glass transition temperature of the material of at least 105°C. In addition, methylnadic acid anhydride was employed as a modified acid anhydride added to the bisphenol epoxy resin as heat cure matrix resin 1, so as to obtain a glass transition temperature of at least 130°C. Also, as the core/shell rubber particles, for example rubber particles as disclosed in Laid-open Japanese Patent Application Number Sho. 63-225617 or Laid-open Japanese Patent Application No. Sho. 61-81455 could be employed, but in the present embodiment styrene-butadiene-methacrylic acid copolymer of mean particle size 0.5 µm (MBS) was employed.

Also, for purposes of comparison, samples blended as below were manufactured.

### (Comparative example 1)

(1) (2) same composition
(3) Spherical fused silica (74 wt%) mean particle size 10 µm
(4) Core/shell rubber particles: none

### (Comparative example 2)

(1) (2) same composition
(3) Spherical fused silica (74 wt%) mean particle size 10 µm
(4) Core/shell rubber particles (10 phr)

The thermal and mechanical properties of the electric insulating materials of the embodiment, comparative example 1, and comparative example 2 of the compositions described above were measured. The glass transition temperatures were measured using a differential scanning calorimeter (DSC) and the other, mechanical properties were measured by the JIS test methods etc. The rupture toughness values were obtained in accordance with the American Society for Testing and Materials ASTM-399, and for crack resistance, the crack resistance coefficient was found by the Olyphant washer test method, using an iron washer.

The Olyphant washer test method will now be described. Figure 2 shows a washer employed in a crack resistance test. Using a cylindrical sample of ∅ 50 mm, thickness 15 mm obtained by molding an Olyphant washer (made of iron) as shown in this Figure, this was subjected to heat cycles as shown in Table 1, and the crack resistance coefficient found from the cycle at which cracking was generated. The number of samples used was 10, and ethanol dry ice solution was employed as the coolant.

**[Table 1]**

| Cycle | Description | Period of test [minutes] | Crack resistance coefficient |
|---|---|---|---|
| 1 | Left untreated | - | 0 |
| 2 | Cooled from 25°C to 5°C | 10 | 1 |
| 3 | Heated from 5°C to 25°C | 30 | 2 |
| 4 | Cooled from 25°C to -15°C | 10 | 3 |
| 5 | Heated from -15°C to 25°C | 30 | 4 |
| 6 | Called from 25°C to -35°C | 10 | 5 |
| 7 | Heated from -35°C to 25°C | 30 | 6 |
| 8 | Cooled from 25°C to -55°C | 10 | 7 |
| 9 | Heated from -55°C to 25°C | 30 | 8 |
| 10 | Heated from 25°C to 130°C | 30 | 9 |
| 11 | Cooled from 130°C to -55°C | 10 | 10 |
| 12 | Heated from -55°C to 150°C | 30 | 11 |
| 13 | Cooled from 150°C to -75°C | 10 | 12 |
| 14 | Heated from -75°C to 170°C | 30 | 13 |
| 15 | Cooled from 170°C to -75°C | 10 | 14 |
| 16 | Heated from -75°C to 25°C | 30 | 15 |
| 17 | All cycles passed through | - | 16 |

Next, the test results are shown in Table 2. The glass transition temperature was unchanged at 136°C, since the heat cure matrix in the embodiment, comparative example 1, and comparative example 2 was the same.

In contrast, in the case of comparative example 1, although the mechanical strength was of the standard level, the brittleness which is characteristic of epoxy resin appeared, and the fracture toughness value was low at K_{IC}=2.0 and concomitantly with this the crack resistance coefficient also was only 9.5.

Also, although, in comparative example 2, the fracture toughness value was raised by 20% from 2.0 to 2.4 by addition of rubber particles and the crack resistance coefficient was also raised, shortcomings of the rubber particles had an adverse effect on mechanical strength, causing a drop of about 10% in both bending and tensile strength.

In contrast, in the embodiment, mechanical strength was improved by 15 to 18% with respect to comparative example 1 and by 28 to 32% with respect to comparative example 2, while maintaining the fracture toughness value and crack resistance coefficient.

**[Table 2]**

| | Comparative Example 1 | Comparative Example 2 | Embodiment 1 | Embodiment 2 |
|---|---|---|---|---|
| Filler composition | Silica | Silica Core/shell rubber | Silica of two particle sizes Core/shell rubber | Silica of two particle sizes |
| Glass transition temperature Tg (°C) | 136 | 136 | 136 | 136 |
| Flexural strength (MPa) | 131 | 117 | 150 | 172 |
| Flexural modulus(GPa) | 14 | 11 | 11 | 14 |
| Tensile strength (MPa) | 76 | 68 | 90 | 100 |
| Tensile modulus(GPa) | 16 | 12 | 12 | 14 |
| Fracture toughness value K_{IC} (mPa.m^{0.5}) | 2.0 | 2.4 | 2.5 | 2.0 |
| Hardener viscosity at 60°C (mPa.s) | 1000 | 1000 | 300 | 300 |
| Viscosity of blend at 60°C (mPa.s) | 5000 | 5500 | 6000 | 6000 |
| Crack resistance coefficient (iron OW method) | 9.5 | 14.5 | 15.4 | 10.0 |

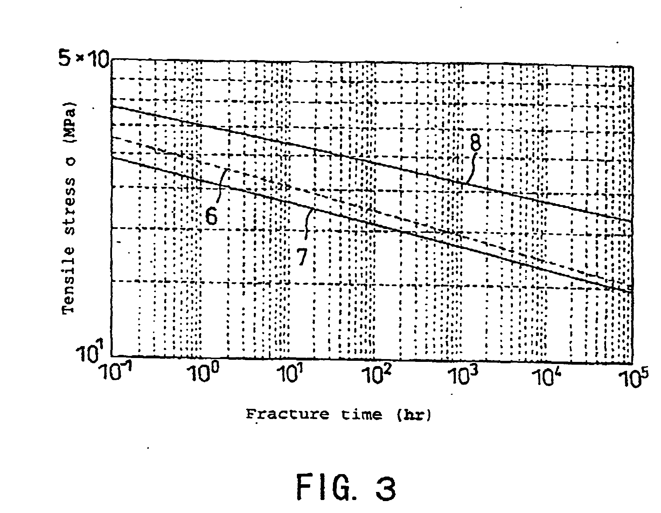

Next, the long-period creep properties in the present embodiments will be described in detail with reference to Figure 3.

Figure 3 is a graph showing the long period creep rupture property characteristic at 115 ° C of electric insulating material of the three types according to the embodiment, comparative example 1 and comparative example 2 described above. In more detail, it shows the creep rupture property characteristic found by the least squares method, by plotting the time at which rupture occurred on applying tensile stress σ at 115°C to the sample. In this Figure, in the case of the embodiment (reference symbol 8), in comparison with comparative example 1 (reference symbol 6) and comparative example 2 (reference symbol 7), a creep rupture property characteristic of much higher level was obtained because of the high initial base strength. It should be noted that, in conventional material evaluation, such data comparison with the heat resistance level of the heat cure matrix made the same is not conducted.

It may therefore be concluded from the creep rupture property characteristic of Figure 3 that maximum benefit is obtained when the electric insulating material indicated in the embodiment is constituted as an dielectric device employed for a long period at high temperature.

In this way, according to the present embodiment, an excellent balance of properties of mechanical strength, fracture toughness value and crack resistance can be obtained. Also, if spherical silica of a plurality of different particle sizes (two kinds in the case of the embodiment) is dispersed therein, fluidity is improved by the "bearing effect", so the viscosity of the curing agent blend can be reduced. Also, although, typically, viscosity and thixotropy rise when rubber particles are added to the molding material, in this embodiment, the viscosity of the blend is actually lower when the main epoxy resin blend and the curing agent blend are mixed, thereby achieving easy processing.

It should be noted that, although in the embodiment described above, large particle size silica 3 and small particle size silica 4 were employed as the spherical fused silica in the inorganic filler 2, the same performance could be obtained by using as the large grain size silica crystalline or fused pulverized silica.

Also, since the silica of small particle size has a surface area that is several thousand times that of the silica of large particle size, its adhesion area is large, resulting in improved mechanical strength. However, if the silica surface area becomes large, a large amount of adhering impurities may become mixed therewith, affecting the epoxy resin reaction. In this case, pre-reaction of the epoxy resin during storage can be prevented and storage stability of the blend can be improved by pre-blending small particle size silica with the curing agent comprising the modified acid anhydride i.e. by preparing, as the curing agent blend, a mixture of large particle size silica and methylnadic acid anhydride.

Furthermore, when electric insulating material according to the embodiments described above is manufactured, spherical large particle size silica is blended with the bisphenol-based epoxy resin, and MBS rubber particles are added in small quantities at a time, so that aggregation does not take place, while stirring this epoxy resin blend in a concentric biaxial mixer at low temperature condition of 40°C; when the initial dispersion has been completed, stirring is continued while the temperature is raised at 40°C/hr and this is then maintained at a temperature of 120°C; dispersion of the main epoxy resin blend is then completed.

When the electric insulating material is manufactured by this method, due to the increase in temperature and dispersion of the rubber particles, the benefit is obtained that shearing force of the filler acts on the rubber particles causing aggregations to be rapidly broken up and dispersed.

Also, the effect of removing aggregations due to foreign bodies or poor dispersion can be achieved by filtering intermediate blends of the electric insulating material, such as for example a curing agent blend obtained by preblending small particle size silica with the curing agent comprising a modified acid anhydride or the epoxy resin blend obtained by blending spherical large particle diameter silica with bisphenol-based epoxy resin, using a metal mesh filter of mesh finer than 50 mesh, for example 80 mesh.

### (Further embodiment)

The electric insulating material of the present invention is not restricted to the embodiment described above and may be modified in various ways.

For example, instead of the bisphenol based epoxy resin and methylnadic acid anhydride employed as the heat cure matrix resin, the same effect can be attained by combining curing agents or any desired curing accelerator such as curing agents of acid anhydride type, such as resol-type phenolic resins, urea and resins (urea-resin), or isocyanates, categorised with industrial epoxy resins or aliphatic, alicyclic, aromatic or halogen-based types having epoxy groups, in accordance with the application.

Also, if, instead of methylnadic acid anhydride, hydrogenated nadic acid manufactured by combining hydrogen, using a metal catalyst, with the double bond present in the aliphatic ring of methylnadic acid anhydride, is employed, the mechanical strength, fracture toughness value and crack resistance can be further improved and discoloration of the material resulting from oxidation of the curing agent constituent during curing can be prevented.

Also, the benefits of the present invention are not impeded by conjoint use of defoaming agents, surfactants, or reactivity diluents, in order to ensure easy processing of the molding material.

Also, as the inorganic filler, instead of using silica, depending on the application, mineral materials such as alumina, talc, or calcium carbonate may be employed. Also, mechanical strength and fracture toughness value can be further improved by employing flat particles such as milled fiber instead of the spherical silica. Furthermore, performance can be stabilized if coupling treatment is performed with for example silane coupling agents, in order to improve adhesion of the inorganic filler.

Furthermore, as the organic filler material, instead of using styrene-butadiene-methacrylic acid copolymer (MBS) having a core/shell structure, the same benefits can be obtained by using a core made of for example acrylic rubber instead of for example the MBS core material, namely, styrene butadiene rubber (SBR).

Also, even by using fine particulate rubber not having a core/shell structure, the same benefits in regard to improved toughness can be obtained so long as a dispersion system which is completely uniform can be obtained by special mixing techniques such as solvent dispersion or roller dispersion.

As the other embodiment, the characteristics of a system in which core/shell rubber has been removed from the embodiment of the invention are shown as embodiment 2 in Table 2 described above.

The material composition of embodiment 2 is as follows.

### (Embodiment 2)

(1) Bisphenol-based epoxy resin (100 phr)
   Breakdown:
   Bisphenol A epoxy resin (epoxy equivalent 360, 50 phr)
   Bisphenol F epoxy resin (epoxy equivalent 360, 50 phr)
(2) Methylnadic anhydride (85 phr)
(3) Spherical fused silica (74 wt% of heat cure matrix)
   Breakdown:
   Mean particle size 10 µm (70 wt%)
   :Mean particle size 10 µm (4.0 wt%: 5.4 wt% with respect of the total silica)
(4) No core/shell rubber particles.

Comparing the electric insulating material of this embodiment 2 with the electric insulating material of embodiment 1, it was found that, although the toughness and crack resistance were lowered, the base strength was considerably increased. The electric insulating material of embodiment 2 is suitable for insulating materials such as for example the operating rods of switchgears, which are employed at high temperature and under high stress, as these have no special inserts (objects embedded in the molding) such as would generate internal stress.

It should be noted that the electric insulating material according to the embodiments of the present invention can be widely applied to automatic molding such as vacuum molding and automatic pressure gelation etc, in which the material is poured into a metal mold under vacuum.

With the above embodiments of the present invention, an electric insulating material and method of manufacture thereof can be obtained in which the lowering of mechanical strength which occurs when epoxy molding resin is modified by addition of rubber particles can be curbed.

Obviously, numerous additional modifications and variations of the present invention are possible in light of the above teachings. It is therefore to be understood that within the scope of the appended claims, the present invention may be practiced otherwise than as specially described herein.

## Claims

1. An electric insulating material, comprising:
a heat cure matrix resin including epoxy resin and modified acid anhydride, all or part of said modified acid anhydride is methylnadic acid anhydride or nadic acid anhydride that has been subjected to hydrogenation treatment;
spherical fused silica inorganic particles including two or more types of particle size distribution, wherein a content of said inorganic particles is 50 wt% to 80 wt% of the total, a mean particle size of said particles of larger particle size being 2 µm to 20 µm and a mean particle size of said particles of smaller particle size being 0.5 µm to 5 µm, content constituting 2 wt% to 30 wt% of said inorganic particles; and
rubber particles including a core/shell structure.

2. The electric insulating material according to claim 1, wherein a glass transition temperature of said cured heat cure matrix resin and a cured material as such is 105°C or more in differential scanning calorimeter analysis.

3. The electric insulating material according to claim 1 or claim 2,
wherein a substitute for larger particle size spherical fused silica inorganic particles is crystalline or fused pulverized silica.

4. The electric insulating material according to any preceding claims,
wherein a content of said rubber particles is 3 phr (per hundred of resin of weight) to 20 phr with respect to 100 of said epoxy resin in said heat cure matrix resin, and a mean particle size thereof is 0.1 µm to 1.0 µm.

5. A method of manufacturing an electric insulating material including
a heat cure matrix resin comprising epoxy resin and a modified acid anhydride, all or part of said modified acid anhydride is methylnadic acid anhydride or nadic acid anhydride that has been subjected to hydrogenation treatment;
spherical fused silica inorganic particles having a particle size distribution of two or more kinds, wherein a content of said inorganic particles is 50 wt% to 80 wt% of the total, a mean particle size of said particles of larger particle size being 2 µm to 20 µm and a mean particle size of said particles of smaller particle size being 0.5 µm to 5 µm, content constituting 2 wt% to 30 wt% of said inorganic particles; and
rubber particles including a core/shell structure;
said method comprising:
blending said inorganic particles with said main epoxy resin agent or modified acidic anhydride curing agent in said heat cure matrix resin; and
admixing said rubber particles whilst raising the temperature.

6. A method of manufacturing an electric insulating material including
a heat cure matrix resin comprising epoxy resin and a modified acid anhydride, all or part of said modified acid anhydride is methylnadic acid anhydride or nadic acid anhydride that has been subjected to hydrogenation treatment;
spherical fused silica inorganic particles including a particle size distribution of two or more kinds, wherein a content of said inorganic particles is 50 wt% to 80 wt% of the total, a mean particle size of said particles of larger particle size being 2 µm to 20 µm and a mean particle size of said particles of smaller particle size being 0.5 µm to 5 µm, content constituting 2 wt% to 30 wt% of said inorganic particles; and
rubber particles including a core/shell structure;
said method comprising:
discharging a main epoxy resin agent and modified acid anhydride curing agent out of said heat cure matrix resin in which said inorganic particles and said rubber particles are blended; and
then, after mixing or before pouring said main epoxy resin agent and modified acid anhydride curing agent in said heat cure matrix resin, passing said blended material through a filter of mesh finer than 50 mesh.

## Patentansprüche

1. Elektrisch isolierendes Material, das umfasst:
ein wärmehärtendes Matrixharz, das ein Epoxidharz und ein modifiziertes Säureanhydrid umfasst, wobei das gesamte modifizierte Säureanhydrid oder ein Teil davon Methyl-5-norbornen-2,3-dicarbonsäureanhydrid (methylnadic acid anhydride) oder 5-Norbornen-2,3-dicarbonsäureanhydrid (nadic acid anhydride), das einer Hydrierungsbehandlung unterzogen wurde, ist; kugelförmige anorganische Quarzglasteilchen, die zwei oder mehre Arten der Teilchengrößenverteilung umfassen, wobei der Gehalt an den anorganischen Teilchen 50 bis 80 Gew.-% der Gesamtmenge beträgt, die mittlere Teilchengröße der Teilchen größerer Teilchengröße 2 µm bis 20 µm beträgt und die mittlere Teilchengröße der Teilchen kleinerer Teilchengröße 0,5 µm bis 5 µm beträgt, wobei der Gehalt 2 Gew.-% bis 30 Gew.-% der anorganischen Teilchen beträgt; und
Kautschukteilchen, die eine Kern/Hülle-Struktur umfassen.

2. Elektrisch isolierendes Material nach Anspruch 1,
wobei die Glasübergangstemperatur des gehärteten wärmehärtenden Matrixharzes und des gehärteten Materials als solchem bei einer Differential-Scanning-Kalorimeter-Analyse 105 °C oder mehr beträgt.

3. Elektrisch isolierendes Material nach Anspruch 1 oder 2,
wobei ein Ersatz für kugelförmige anorganische Quarzglasteilchen größerer Teilchengröße kristallines pulverisiertes Siliciumdioxid oder pulverisiertes Quarzglas ist.

4. Elektrisch isolierendes Material nach einem der vorhergehenden Ansprüche,
wobei der Gehalt an den Kautschukteilchen 3 % (Prozent des Harzgewichts) bis 20 % (Prozent des Harzgewichts), bezogen auf 100 des Epoxidharzes, in dem wärmehärtenden Matrixharz beträgt und die mittlere Teilchengröße derselben 0,1 µm bis 1,0 µm beträgt.

5. Verfahren zur Herstellung eines elektrisch isolierenden Materials, das
ein wärmehärtendes Matrixharz, das ein Epoxidharz und
ein modifiziertes Säureanhydrid umfasst, wobei das gesamte modifizierte Säureanhydrid oder ein Teil davon Methyl-5-norbornen-2,3-dicarbonsäureanhydrid (methylnadic acid anhydride) oder 5-Norbornen-2,3-dicarbonsäureanhydrid (nadic acid anhydride), das einer Hydrierungsbehandlung unterzogen wurde, ist; kugelförmige anorganische Quarzglasteilchen, die eine Teilchengrößenverteilung von zwei oder mehr Arten aufweisen, wobei der Gehalt an den anorganischen Teilchen 50 bis 80 Gew.-% der Gesamtmenge beträgt, die mittlere Teilchengröße der Teilchen größerer Teilchengröße 2 µm bis 20 µm beträgt und die mittlere Teilchengröße der Teilchen kleinerer Teilchengröße 0,5 µm bis 5 µm beträgt, wobei der Gehalt 2 Gew.-% bis 30 Gew.-% der anorganischen Teilchen beträgt; und
Kautschukteilchen, die eine Kern/Hülle-Struktur umfassen, umfasst;
wobei das Verfahren
das Mischen der anorganischen Teilchen mit dem Hauptepoxidharzmittel oder modifizierten Säureanhydridhärtungsmittel in dem wärmehärtenden Matrixharz und
das Einmischen der Kautschukteilchen unter Erhöhen der Temperatur umfasst.

6. Verfahren zur Herstellung eines elektrisch isolierenden Materials, das
ein wärmehärtendes Matrixharz, das ein Epoxidharz und
ein modifiziertes Säureanhydrid umfasst, wobei das gesamte modifizierte Säureanhydrid oder ein Teil davon Methyl-5-norbornen-2,3-dicarbonsäureanhydrid (methylnadic acid anhydride) oder 5-Norbornen-2,3-dicarbonsäureanhydrid (nadic acid anhydride), das einer Hydrierungsbehandlung unterzogen wurde, ist; kugelförmige anorganische Quarzglasteilchen, die eine Teilchengrößenverteilung von zwei oder mehr Arten aufweisen, wobei der Gehalt an den anorganischen Teilchen 50 bis 80 Gew.-% der Gesamtmenge beträgt, die mittlere Teilchengröße der Teilchen größerer Teilchengröße 2 µm bis 20 µm beträgt und die mittlere Teilchengröße der Teilchen kleinerer Teilchengröße 0,5 µm bis 5 µm beträgt, wobei der Gehalt 2 Gew.-% bis 30 Gew.-% der anorganischen Teilchen beträgt; und Kautschukteilchen, die eine Kern/Hülle-Struktur umfassen, umfasst;
wobei das Verfahren
das Austragen eines Hauptepoxidharzmittels und modifizierten Säureanhydridhärtungsmittels aus dem wärmehärtenden Matrixharz, in dem die anorganischen Teilchen und die Kautschukteilchen eingemischt werden, und anschließend nach dem Mischen oder vor dem Gießen des Hauptepoxidharzmittels und modifizierten Säureanhydridhärtungsmittels in dem wärmehärtenden Matrixharz das Führen des gemischten Materials durch ein Filter einer Maschengröße von feiner als 50 mesh umfasst.

## Revendications

1. Matériau d'isolation électrique, comprenant :
- une résine de matrice thermodurcissable comprenant une résiné époxyde et un anhydride d'acide modifié, une partie ou la totalité dudit anhydride d'acide modifié est l'anhydride d'acide méthylnadique ou l'anhydride d'acide nadique qui a été soumis à un traitement d'hydrogénation ;
- des particules inorganiques sphériques de silice fondue comportant deux types de granulométrie ou plus, dans lequel la teneur desdites particules inorganiques va de 50 % en poids à 80% en poids du total, la taille de particule moyenne desdites particules de granulométrie plus grande allant de 2 µm à 20 µm et la taille de particule moyenne desdites particules de granulométrie plus petite allant de 0,5 µm à 5 µm, la teneur constituant 2% en poids à 30% en poids desdites particules inorganiques ; et
- des particules de caoutchouc ayant une structure noyau/enveloppe.

2. Matériau d'isolation électrique selon la revendication 1, dans lequel une température de transition vitreuse de ladite résine de matrice thermodurcissable durcie et d'un matériau durci tel quel est supérieure ou égale à 105°C selon une analyse calorimétrique différentielle à compensation de puissance.

3. Matériau d'isolation électrique selon la revendication 1 ou 2,
dans lequel un substitut des particules inorganiques sphériques de silice fondue de granulométrie plus grande est une silice pulvérisée cristalline ou fondue.

4. Matériau d'isolation électrique selon l'une quelconque des revendications précédentes,
dans lequel une- teneur desdites particules de caoutchouc va de 3 pcr (pour cent unités pondérales de résine) à 20 pcr, par rapport à 100 de ladite résine époxyde dans ladite résine de matrice thermodurcissable, et leur taille de particule moyenne va de 0,1 µm à 1,0 µm.

5. Procédé de fabrication d'un matériau d'isolation électrique comprenant :
- une résine de matrice thermodurcissable comprenant une résine époxyde et un anhydride d'acide modifié, une partie ou la totalité dudit anhydride d'acide modifié est l'anhydride d'acide méthylnadique ou l'anhydride d'acide nadique qui a été soumise à un traitement d'hydrogénation ;
- des particules inorganiques sphériques de silice fondue comportant deux types de granulométrie ou plus, dans lequel la teneur desdites particules inorganique va de 50 % en poids à 80% en poids du total, la taille de particule moyenne desdites particules de granulométrie plus grande allant de 2 µm à 20 µm et la taille de particule moyenne desdites particules de granulométrie plus petite allant de 0,5 µm à 5 µm, la teneur constituant 2% en poids à 30% en poids desdites particules inorganiques ; et
- des particules de caoutchouc ayant une structure noyau/enveloppe ;
ledit procédé comprenant les étapes consistant à :
- mélanger lesdites particules inorganique avec ledit agent principal de résine époxyde ou ledit agent durcissant anhydride d'acide modifié dans ladite résine de matrice thermodurcissable ; et
- mélanger lesdites particules de caoutchouc tout en élevant la température.

6. Procédé de fabrication d'un matériau d'isolation électrique comprenant :
- une résine de matrice thermodurcissable comprenant une résine époxyde et un anhydride d'acide modifié, une partie ou la totalité dudit anhydride d'acide modifié est l'anhydride d'acide méthylnadique ou l'anhydride d'acide nadique qui a été soumise à un traitement d'hydrogénation ;
- des particules inorganiques sphériques de silice fondue comportant deux types de granulométrie ou plus, dans lequel la teneur desdites particules inorganique va de 50 % en poids à 80% en poids du total, la taille de particule moyenne desdites particules de granulométrie plus grande allant de 2 µm à 20 µm et la taille de particule moyenne desdites particules de granulométrie plus petite allant de 0,5 µm à 5 µm, la teneur constituant 2% en poids à 30% en poids desdites particules inorganiques ; et
- des particules de caoutchouc ayant une structure noyau/enveloppe ;
ledit procédé comprenant les étapes consistant à :
- décharger un agent principal de résine époxyde et un agent durcissant anhydride d'acide modifié de ladite résine de matrice thermodurcissable, dans laquelle lesdites particules inorganiques et lesdites particules de caoutchouc sont mélangées ; puis
- après avoir mélangé ou avant de verser ledit agent principal de résine époxyde et ledit agent durcissant anhydride d'acide modifié dans ladite résine de matrice thermodurcissable, filtrer ledit matériau mélangé sur un tamis ayant une ouverture de maille inférieure à 50 mesh.
